# EUROPEAN PATENT SPECIFICATION

(11) **EP 0 492 892 B1**
(45) Date of publication and mention of the grant of the patent: **04.10.1995**
(21) Application number: 91311500.2
(22) Date of filing: 11.12.1991
(51) Int. Cl.: B60J 1/02

(54) **Adjusting arrangement**
Toleranzausgleichvorrichtung
Organe de reglage

(30) Priority: 20.12.1990 DE 9017220 U
(43) Date of publication of application: 01.07.1992
(73) Proprietor: EMHART INC., Newark, Delaware 19711 (US)
(72) Inventor: Baum, Heinz-Otto, D-6300 Giessen-Allendorf (DE); Blank, Ekhard, D-3180 Wolfsburg 32 (DE)
(74) Representative: Stagg, Diana Christine

(56) References cited:
- EP-A- 0 109 621
- EP-A- 0 385 161
- FR-A- 2 570 334

## Description

The present invention relates to an adjusting arrangement adapted to be displaced relative to a carrier, particularly with an eccentric element rotatably mounted on the carrier. For example, a generic adjusting arrangement of plastics elements consisting of a waisted eccentric element and expanding pin is known for adjustment of e.g. a pane of glass to be stuck to a vehicle body. The eccentric element has a fanned, expanding projection with several fingers which are introduced into a hole in the vehicle body, and a hole extending centrally with respect to the expanding projection, through which the expanding pin is introduced to secure the eccentric element on the body.

For adjustment purposes, the known arrangement is mounted in the region of the body flange on which the windscreen is to be stuck. The pane is provided with adhesive prior to insertion and is inserted in such a way that an end face of the pane is guided in the waist of the eccentric element. The eccentric element can be turned with a special tool, before the expanding pin is completely introduced, to adjust the pane into a centralised position.

This adjusting arrangement has the disadvantages that a hole has to be drilled in the vehicle body for it, the edge of which tends to initiate corrosion, that the arrangement is expensive to produce and is not easy to handle because the eccentric element can be rotated only with the special tool and that further manipulation (the introduction of the pin) is required for fixing purposes. Moreover, a fixed position of the pane is not always guaranteed prior to curing of the adhesive because the non-positive connection between eccentric element and body sheet is slight, even after the expanding pin has been introduced.

Another known adjusting arrangement for mounting of windscreens and rear screens consists of a strip and a slider. The strip has, below one end, a barbed projection which has to be pressed into a hole provided for it in the body, and has transverse furrows at the top. The slider is pushed on to the strip and has a rest for the pane and a resilient locking tongue which engages in the transverse furrows. This known adjusting arrangement also needs a hole, is expensive to produce and can be handled only with difficulty. The strip secured in the body hole cannot be removed without being destroyed.

French specification FR-A-2 570 334 according to the preamble of claim 1 discloses on adjusting arrangement for a component to be displaced relative to a carrier with an eccentric element rotatably mounted by means of a stud on the carrier.

It is accordingly an object of the invention to provide an adjusting arrangement of said type which has better functionality and can be produced inexpensively.

According to the present invention, an adjusting arrangement for a component to be displaced relative to a carrier, with an eccentric element rotatably mounted by means of a stud on the carrier, is characterised in that the stud is welded perpendicular on the carrier and is provided with longitudinally extending ribs which engage in a receiver of the eccentric element surrounding the stud.

The eccentric element is simply placed with its receiver on to the stud. A component to be adjusted can now be displaced relative to the carrier simply by rotating the eccentric element round the axis of the stud. The longitudinal ribs on the one hand allow the eccentric element to be rotated round the stud and, on the other hand, hold the eccentric element securely against unintentional rotation after adjustment has been effected.

The cross-section of the receiver is preferably triangular, which on the one hand allows the eccentric element to be placed on to the stud more easily and, on the other hand, improves the return of the eccentric element against the ribs of the stud after being twisted.

For applications in which the component to be adjusted is not only displaced toward the carrier but is also to be at a certain distance from the carrier, the eccentric element can be provided with a support. The support is preferably in the form of a plate, on one side of which the actual eccentric is arranged so that the component lying on the support can be adjusted by rotation of the eccentric element. Preferably projections can be provided on the other side of the plate so that the support face between eccentric element and carrier is reduced and simpler twisting is thus readily permitted. Furthermore, a bead having the same height as the projections can be provided round the receiver on the side of the plate on which the projections are arranged, on order to distribute a pressure acting perpendicularly from above on to the eccentric element, for example by a tool, uniformly over the carrier.

In a particularly preferred embodiment of the invention, the receiver has the above-mentioned triangular cross-section in its lower portion for receiving the stud and, thereover, a hexagonal cross-section for application of an offset hexagon bar key. Using an offset hexagon bar key, the eccentric element can be twisted slightly on the stud relative to the carrier. As the eccentric element remains fixed in a position, once it has been set, owing to the longitudinal ribs of the stud, rotation of the offset hexagon bar key for adjustment is the only manipulation which has to be performed with the adjusting arrangement according to the invention. This has the enormous advantage that the adjustment can also easily be carried out in an automated manner by a robot or the like.

The eccentric provided on one side of the plate can be formed by a web projecting relative to the plate, thus saving material.

According to a further particularly preferred embodiment, the cross-section of the longitudinal ribs resembles saw-teeth. With this design of the stud, the eccentric element can be twisted only in one direction. Because of this, the self-locking of the adjusting arrangement is increased, on the one hand, and the wear during rotations of the eccentric element round the stud is reduced. In the event of over-adjustment, the eccentric element can simply be rotated further.

The stud is preferably of metal and may be connected to the component by the known stud welding process (for example, DE 31 30 389). According to a preferred embodiment the eccentric element is a single-piece plastics element which can be produced with low material costs in casting moulds without sliders.

The arrangement according to the invention is particularly suitable for adjusting front or rear screens which are stuck to a vehicle body. When panes are stuck into the body, they are stuck to the body by a handling tool after having been provided with a long bead ("caterpiller") of adhesive. As the adhesive used generally has a curing time of 2 to 3 hours and the front and rear screen lie obliquely, the arrangement according to the invention can prevent the pane from sliding downward due to gravity. In most cases, the tolerances in body building are so great that the pane still has to be centralised after it has been placed on the frame provided for it. This centralising can be achieved easily with the arrangement according to the invention. As the pane to be stuck should remain at a predetermined distance from the body during curing, the eccentric element according to the invention is preferably provided with the support.

In order that the present invention be better understood, a preferred embodiment will now be described in greater detail by way of example with reference to the accompanying drawings in which:-
Figure 1 is a partial sectional view of an embodiment of the invention for adjustment of a pane of glass to be stuck to a vehicle body;
Figure 2 is a plan view of the embodiment of Figure 1, and
Figure 3 is a side view of the embodiment of Figure 1.

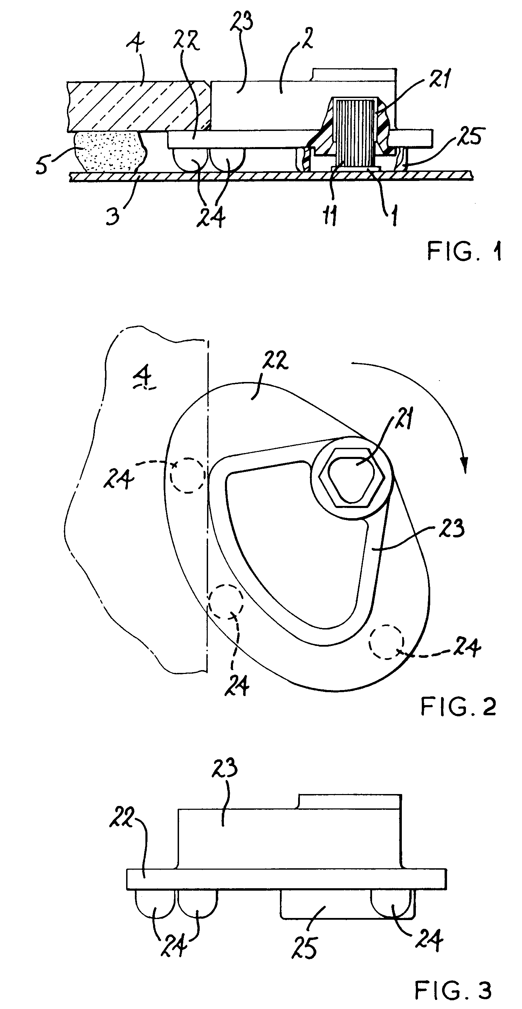

Figure 1 shows the arrangement according to the invention of stud 1 and eccentric element 2 as well as the pane of glass 4 (component), to be adjusted relative to a vehicle body sheet 3 acting as a carrier, and the adhesive 5 between pane of glass 4 and body sheet 3.

The stud 1 is welded perpendicularly on to the body sheet 3 by the known stud welding method and has longitudinally extending ribs 11.

The eccentric element 2 is a single-piece element of resilient plastics material (for example, POM) and is placed on the stud 1 with its receiver 21.

The eccentric element 2 has a plate 22 which serves as a support for the pane 4 and on which an eccentric 23 designed as a web is arranged (Figure 2). The height of the eccentric 23 corresponds substantially to the thickness of the pane of glass 4.

Three projections 24 (Figure 3) has a bead 25 extending round the receiver 21 are shaped on the underside of the plate 22. The distance between the pane of glass 4 and the body sheet 3 is fixed by the height of the projections 24, of the bead 25 and the thickness of the plate 22.

The receiver 21 is constructed as a perforation and has a triangular cross-section in the region on which the stud 1 acts. The receiver 21 passes through the plate 22 and continues downwardly to the body sheet 3, but only to a height at which it does not come into contact with a weld seam of the stud 1. Above plate 22, the body of the receiver 21 passes without a projection into web 23 of the eccentric and the receiver 21 has a hexagonal cross-section in the upper portion so that the eccentric element 2 can be rotated with an offset hexagon bar key.

The eccentric element is placed on to the stud 1 prior to adjustment of the pane 4 such that the smallest radius of the eccentric 23 serves after application as a rest for the pane 4, as shown in Figure 2. An adjustment can be made by rotating the eccentric element in the direction of the arrow shown in Figure 2.

Application of the eccentric element 2 on to the stud 1 is simplified by the triangular cross-section of the receiver 21 as the receiver 21 receives radial resilience owing to the triangular cross-section. The radial resilience also enables the support 21 at the contact points relative to the stud 1 to return perfectly to the longitudinal ribs of the stud 1 after a rotation of the eccentric element 2 round the stud 1, so a good positive connection between eccentric element 2 and stud 1 is achieved.

This embodiment of the invention has an extremely small overall height which does not significantly exceed the external surface of the pane 4. This has the advantage that, if a covering is provided between exterior of the pane and body sheet 3, i.e. over the adjusting arrangement(s), after adjustment, a large constructional clearance remains for the construction of the covering.

The eccentric element 2 can easily be produced in a casting mould without sliders with minimum material consumption. It is in a single piece, so only one casting mould is required. As only one manipulation is necessary for adjustment, namely the rotation of the eccentric element by means of an offset hexagon bar key, automation of a process using the component is possible.

## Claims

1. Adjusting arrangement for a component (4) to be to be displaced relative to a carrier (3), with an eccentric element (2) rotatably mounted by means of a stud (1) on the carrier (3), characterised in that the stud (1) is welded perpendicular on the carrier (3) and is provided with longitudinally extending ribs(11) which engage in a receiver roation (21) of the eccentric element (2) surrounding the stud (1).

2. Adjusting arrangement according to Claim 1, wherein the receiver (21) has a substantially triangular cross-section.

3. Adjusting arrangement according to Claim 1 or 2, wherein the eccentric element (2) is allocated a support (22) which holds the component (4) at a fixed distance from the carrier (3).

4. Adjusting arrangement according to Claim 3, wherein the support is a plate (22), on one side of which an eccentric (23) is provided and on the other side of which projections (24) as well as a bead (25) arranged round the receiver (21) are provided for bearing relative to the carrier (3).

5. Adjusting arrangement according to one of Claims 1 to 4, wherein the receiver (21) has, on its side remote from the carrier (3), a hexagonal cross-section for application of an offset hexagon bar key.

6. Adjusting arrangement according to Claim 4 or 5, wherein the eccentric is formed by a web (23) projecting relative to the plate (22).

7. Adjusting arrangement according to one of Claims 1 to 6, wherein the cross-section of the longitudinal ribs (11) resembles saw teeth.

8. Adjusting arrangement according to one of Claims 1 to 7, wherein the eccentric element (2) is a single-piece plastics element and the stud (1) consists of metal.

9. Use of an adjusting arrangement according to one of Claims 1 to 8 for adjusting a pane which is to be stuck centrally into a frame, preferably a pane of glass (4) to be inserted into a vehicle body (3).

## Patentansprüche

1. Toleranzausgleichvorrichtung für ein Bauteil (4), welches mit Bezug auf einen Träger (3) zu verschieben ist, mit einem Exzenterglied (2), das drehbar mit Hilfe eines Bolzens (1) an dem Träger (3) angeordnet ist,
**dadurch gekennzeichnet,**
daß der Bolzen (1) senkrecht mit dem Träger (3) verschweißt ist und mit sich longitudinal erstreckenden Rippen (11) versehen ist, die in einen Aufnehmer (21) des Exzentergliedes (2) eingreifen, welcher den Bolzen (1) umgibt.

2. Toleranzausgleichvorrichtung nach Anspruch 1, dadurch gekennzeichnet, daß der Aufnehmer (21) einen im wesentlichen dreieckförmigen Querschnitt aufweist.

3. Toleranzausgleichvorrichtung nach Anspruch 1 oder 2, dadurch gekennzeichnet, daß das Exzenterglied (2) einer Stütze (22) zugeordnet ist, welche das Bauteil (4) in einem fixierten Abstand von dem Träger (3) hält.

4. Toleranzausgleichvorrichtung nach Anspruch 3, dadurch gekennzeichnet, daß die Stütze eine Platte (22) ist, auf deren einer Seite ein Exzenter (23) vorgesehen ist und auf deren anderer Seite Vorsprünge (24) und ein Saum (25) um den Aufnehmer (21) zwecks Lagerung in bezug auf den Träger (3) angeordnet sind.

5. Toleranzausgleichvorrichtung nach einem der Ansprüche 1 bis 4, dadurch gekennzeichnet, daß der Aufnehmer (21) an seiner von dem Träger (3) abgewandten Seite einen hexagonalen Querschnitt zur Anwendung eines gebogenen Sechskantschlüssels aufweist.

6. Toleranzausgleichvorrichtung nach Anspruch 4 oder 5, dadurch gekennzeichnet, daß der Exzenter von einem Steg (23) gebildet ist, welcher mit Bezug auf die Platte (22) abragt.

7. Toleranzausgleichvorrichtung nach einem der Ansprüche 1 bis 6, dadurch gekennzeichnet, daß der Querschnitt der longitudinalen Rippen (11) Sägezähnen ähnelt.

8. Toleranzausgleichvorrichtung nach einem der Ansprüche 1 bis 7, dadurch gekennzeichnet, daß das Exzenterglied (2) ein einteiliges Kunststoffelement ist und daß der Bolzen (1) aus Metall besteht.

9. Verwendung einer Toleranzausgleichvorrichtung nach einem der Ansprüche 1 bis 8 zum Justieren einer Scheibe, die zentral in einen Rahmen eingesetzt ist, vorzugsweise einer Glasscheibe (4), die in eine Fahrzeugkarosserie (3) einzusetzen ist.

## Revendications

1. Organe de réglage destiné à un composant (4) qui doit être déplacé par rapport à un support (3), un élément excentrique (2) étant monté de façon à pouvoir tourner au moyen d'un tourillon (1) qui se trouve sur le support (3), caractérisé en ce que le tourillon (1) est soudé perpendiculairement au support (3) et est pourvu de nervures (11) qui s'étendent dans le sens de la longueur, lesquelles viennent en prise dans un logement de rotation (21) de l'élément excentrique (2) qui entoure le tourillon (1).

2. Organe de réglage selon la revendication 1, dans lequel le logement (21) a une section sensiblement triangulaire.

3. Organe de réglage selon la revendication 1 ou 2, dans lequel l'élément excentrique (2) comporte un support (22) qui maintient le composant (4) à une distance fixe du support (3).

4. Organe de réglage selon la revendication (3), dans lequel le support est une plaque (22), sur un côté de laquelle est présent un excentrique (23) et sur l'autre côté de laquelle des protubérances (24) aussi bien qu'un bourrelet (25) disposées autour du logement (21) sont prévus pour être porteurs par rapport au support (3).

5. Organe de réglage selon l'une des revendications 1 à 4, dans lequel le logement (21) a, sur son côté éloigné du support (3) une section hexagonale pour utilisation d'une clé de blocage hexagonale décalée.

6. Organe de réglage selon la revendication 4 ou 5, dans lequel l'excentrique est formé par un profil (23) qui se prolonge par rapport à la plaque (22).

7. Organe de réglage selon l'une des revendications 1 à 6, dans lequel la section des nervures longitudinales (11) ressemble à des dents de scie.

8. Organe de réglage selon l'une des revendications 1 à 7, dans lequel l'élément excentrique (2) est un élément en matière plastique d'une seule pièce et le tourillon (1) est constitué de métal.

9. Utilisation d'un organe de réglage selon l'une des revendications 1 à 8 pour régler une vitre qui va être collée en étant centrée dans un cadre, de préférence une vitre (4) à introduire dans une carrosserie de véhicule (3).
